# EUROPEAN PATENT APPLICATION

(11) **EP 2 343 875 A1**
(43) Date of publication of application: **13.07.2011**
(21) Application number: 09821806.8
(22) Date of filing: 21.10.2009
(51) Int. Cl.: H04M 3/00, H04W 48/16, H04W 48/18

(54) **CALL CONTROL SYSTEM, CALL CONTROL DEVICE, TERMINAL DEVICE AND CALL CONTROL METHOD**

(30) Priority: 24.10.2008 JP 2008274321
(71) Applicant: NTT DOCOMO, INC., Chiyoda-ku Tokyo 100-6150 (JP)
(72) Inventor: AKUZAWA, Mari, Tokyo 100-6150 (JP); IWASHINA, Shigeru, Tokyo 100-6150 (JP); AOYAMA, Shinya, Tokyo 100-6150 (JP)
(74) Representative: Henseler, Daniela
(86) International application number: PCT/JP2009/005527
(87) International publication number: WO 2010/047106

(57) **Abstract**

There are provided a call control system, a call controller, a terminal device, and a call control method capable of selecting an optimum communication network without overly complicating the configuration of the terminal device and the call controller. A call controller accesses information representing present conditions including a failure of a communication network held in a communication network present condition data holding unit, and information held in an applicable priority order data holding unit on the terminal device and which is information of the priority order for communication network selection acquired and held in the call-originating side information acquiring and holding unit on the call controller side. A call control unit on the call controller side selects an optimum communication network for setting up a call.

## Description

### Technical Field

The present invention relates to a call control system, a call controller, a terminal device, and a call control method, in particular, relates to a call control system, a call controller, a terminal device, and a call control method capable of selecting an optimum communication network to be used for setting up a call at the moment in an environment where each terminal device and call controller may selectively use multiple communication networks.

### Background Art

In recent years, a communication system, for example, a mobile communication system or an IP telephone system which performs communication selectively using multiple communication networks, has been implemented.
Such a communication system generally employs a configuration which holds information regarding selection of communication network to be used for communication at the moment on an applicable terminal device side, and then selects a communication network used for setting up a call depending on the held information.

That is, the terminal device holds data representing a communication network available according to the specifications of the terminal device and data representing a communication network available in an area where the terminal device is located at the moment. For communication, the terminal device selects an optimum communication network at that moment for use according to the type of bearer, for example.
Meanwhile, in the IP telephone system, the technology of call connection processing has been proposed. When congestion occurs at the call controller in making a call connection between a terminal device on the call-originating side and a terminal device on the receiving side via the communication network, connection information for processing a call connection request from the terminal device on the call-originating side is transferred to another call controller in the network for the call connection processing (see Patent Document 1, for example).

### Prior Art Documents

### Patent Documents

Patent Document 1: JP Laid-open Patent Publication 2008-131393 A (Abstract, Claim 1, Paragraphs 0005 and 0006, etc.)

### Summary of the Invention

### Problem To Be Solved

On the other hand, in the communication system capable of using multiple communication networks selectively for setting up a call, each terminal device described above holds information required for this selection. However, in general, each terminal device does not hold information having a serious impact in setting up a call, such as congestion or failure of the communication networks.
However, storing and updating such information in the respective terminal devices so as to always be ready to adapt regardless of possibility for use makes the terminal devices so-called over-engineered, which is impractical. Besides, there is generally a tendency toward excessive production capacity for the overall communication system.
The present invention been made in view of the above circumstances, and an objective of the present invention is to provide a call control system, a call controller, a terminal device, and a call control method capable of selecting an optimum communication network without excessively complicating the configurations of the terminal device and the call controller.

### Solution to the Problem

One aspect according to the present invention has been made to solve the above problem, proposing herein a system and a device as given in the following.
(1) A call control system including:
   a call controller for controlling a call by selectively using a plurality of communication networks; and a plurality of terminal devices applicable in the plurality of communication networks,
   the call controller comprising:
      a communication network present condition monitoring unit for monitoring present conditions of the plurality of communication networks and acquiring through the monitoring communication network present condition data representing the present conditions of the communication networks;
      a communication network present condition data holding unit for collecting the network present condition data acquired by the communication network present condition monitoring unit and holding the collected data in a storage medium;
      a call-originating side information acquiring and holding unit for receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
      a call control unit for controlling the call based on the applicable network data and the available network data held in the call-originating side information acquiring and holding unit, and the communication network present condition data held in the communication network present condition holding unit upon reception of the call-originating request from the terminal device on the call-originating side, and
      the terminal device comprising:
         an applicable priority order data holding unit for holding applicable priority order data that represents a priority order for selection of the communication network applicable for setting up a call in compliance with the call-originating request; and
         a terminal side call control unit for sending the call-originating request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending the call-originating request under a condition of applying said another communication network in accordance with the application change notice.

The call control system described in the above (1) is capable of selecting an optimum communication network used for setting up the call without increasing the load on either the call controller side or the terminal device side with reference to information held in the communication network present condition data holding unit on the call controller side and information held in the applicable priority order data holding unit on the terminal device side.

In the call control system of claim 1, wherein the terminal device is configured so that the terminal side call control unit sends the call-originating request attached with a call identifier for specifying one call, and the call controller is configured so as to identify the one call by the identifier attached to the call-originating request from the terminal device.
The call control system described in the above (2) is capable of identifying identity of one call by the call identifier in various stages of call setting processing in the call control system described in the above (1), allowing precise and effective selection of a communication network.

(3) A call controller applicable to a call control system comprising: the call controller for controlling a call by selectively using a plurality of communication networks and a plurality of terminal devices applicable in the plurality of communication networks; the call controller comprising:
a call control communication unit for communicating with an outside;
a communication network present condition monitoring unit for monitoring present conditions of the plurality of communication networks and acquiring through the monitoring, communication network present condition data representing present conditions of the communication networks;
a communication network present condition data holding unit for collecting the network present condition data acquired by the communication network present condition monitoring unit and holding the collected data in a storage medium;
a call-originating side information acquiring and holding unit for receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
a call control unit for controlling the call based on the applicable network data and the available network data held in the call-originating side information acquiring and holding unit, and the communication network present condition data held in the communication network present condition holding unit upon reception of the call-originating request from the terminal device on the call-originating side.
With the call control system described in the above (3), the call control unit of the call controller is capable of selecting an optimum communication network used for setting up the call based on information held in the communication network present condition data holding unit of the call controller and information held in the applicable priority order data holding unit on the terminal device side.

(4) The call controller of claim 3, wherein the call-originating side information acquiring and holding unit and the call control unit are configured so as to identify one call by a call identifier attached to the call-originating request from the terminal device.
The call control system described in the above (4) is capable of identifying identity of one call by a call identifier supplied from the corresponding terminal device side in various stages of call setting processing in the call control system described in the above (3), allowing precise and effective selection of a communication network.

(5) A terminal device appropriate for a call control system comprising a call controller for controlling a call by selectively using a plurality of communication networks and a plurality of terminal devices applicable in the plurality of communication networks, the terminal device comprising:
an applicable priority order data holding unit for holding applicable priority order data that represents a priority order for selection of a communication network applicable for setting up the call in compliance with a call-originating request; and
a terminal side call control unit for sending an call-originating call request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending a call-originating request under a condition of applying said another communication network in accordance with the application change notice.

With the terminal device described in the above (5), setting up of a call may be carried out based on selection of an optimum communication network using not only data of priority order for selection of a communication network to be applied in setting up of the call, which is held in the applicable priority order data holding unit on its own side, but also different data held on the corresponding call controller side.

(6) The terminal device of claim 5, wherein the terminal side call controller is configured so as to send the call-originating request attached with a call identifier for specifying one call.
The terminal device described in the above (6) is capable of identifying identity of one call by a call identifier supplied from the corresponding call controller side in various stages of call setting processing in the terminal device described in the above (5), allowing precise and effective selection of a communication network.

(7) A call control method for a call control system including a call controller for controlling a call by selectively using a plurality of communication networks and a plurality of terminal devices applicable in the plurality of communication networks, the call control method comprising:
in the call controller,
a communication network present condition monitoring step of monitoring present conditions of the plurality of communication networks and acquiring through the monitoring, communication network present condition data representing present conditions of the communication networks;
a communication network present condition data holding step of collecting the network present condition data acquired in the communication network present condition monitoring step and holding the collected data in a storage medium;
a call-originating side information acquiring and holding step of receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
a call controlling step of controlling the call based on the applicable network data and the available network data held in the call-originating side information acquiring and holding unit, and the communication network present condition data held in the communication network present condition holding unit upon reception of a call-originating request from the terminal device on the call-originating side, and in the terminal device,
an applicable priority order data holding step of holding applicable priority order data that represents a priority order for selection of the communication network applicable for setting up the call in compliance with a call-originating request; and
a terminal side call control step of sending an call-originating request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending a call-originating request under a condition of applying said another communication network in accordance with the application change notice.

The call control method described in the above (7) is capable of selecting an optimum communication network used for setting up the call without increasing the load on either the call controller side or the terminal device side with reference to communication network present condition data held on the call controller side and applicable priority order data held on the terminal device side.

### Advantageous Effects of the Invention

According to the present invention, a call control system, a call controller, a terminal device, and a call control method capable of selecting an optimum communication network without overly complicating the configuration of the terminal device and the call controller are implemented.

### Brief Description of the Drawings

FIG. 1 is a functional block diagram illustrative of a call controller according to an embodiment of the present invention;
FIG. 2 is a functional block diagram illustrative of a terminal device according to an embodiment of the present invention;
FIG. 3 is a schematic diagram illustrative of a configuration example of a call control system according to the present invention;
FIG. 4 is a schematic diagram describing operations of the call controller of FIG. 3;
FIG. 5 is a schematic diagram describing operations of the call controller of FIG. 3;
FIG. 6 is a diagram illustrative of a structure of data held in the terminal device of FIG. 2;
FIG. 7 is a sequence chart describing operations of location registration in a call control system according to an embodiment of the present invention;
FIG. 8 is a sequence chart for the case of sending an outgoing call request from a terminal device on the outgoing side to the call controller;
FIG. 9 is a sequence chart for call-receiving processing between a call controller used by a terminal device on the receiving side and the terminal device;
FIG. 10 is a sequence chart for the case of using a communication network selected initially by the terminal device on the outgoing side for setting up the call without change; and
FIG. 11 is a sequence chart for the case of changing the communication network selected initially by the terminal device on the outgoing side and using a different communication network for setting up the call.

### Description of Embodiments

Hereafter, an embodiment of the present invention will be described with reference to the drawings to explain the present invention. Note that for the sake of simplicity, substantial parts to be subjects of the description are magnified in the drawings referenced as necessary, and parts other than the substantial parts are appropriately simplified or omitted.

### (Configuration Example of Call Controller)

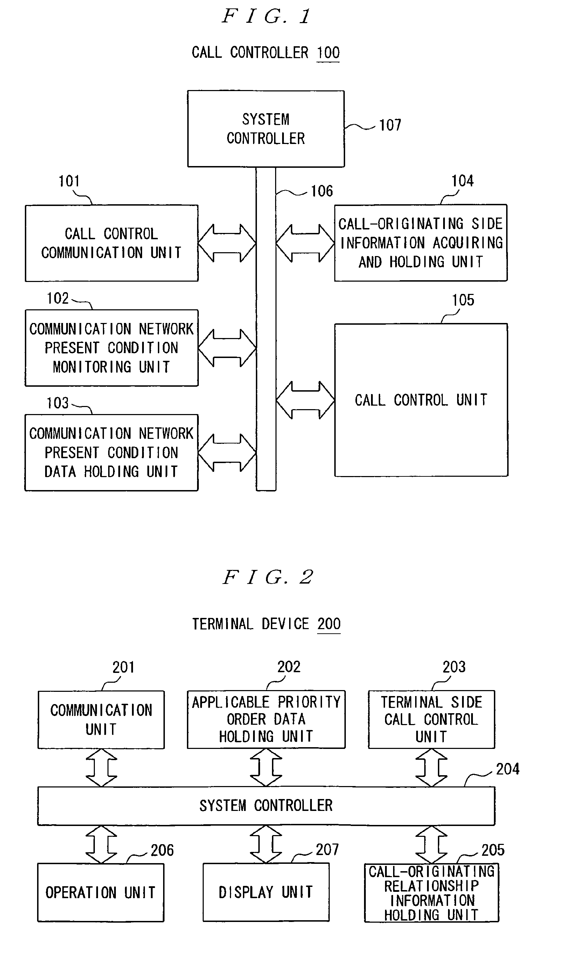

FIG. 1 is a functional block diagram illustrative of a call controller according to an embodiment of the present invention.

This call controller 100 includes a call control communication unit 101, a communication network present condition monitoring unit 102, a communication network present condition holding unit 103, a call-originating side information acquiring and holding unit 104, and a call control unit 105, which are connected to a system controller 107 via a bus 106.
The system controller 107 centrally manages the above respective units so as to make the respective units execute their entire functions, and thereby allowing the call controller 100 as an integral part of the functions of the respective units to fully execute its own function.

The individual functional parts function in the following ways in cooperation with the system controller 107.
The call control communication unit 101 performs various types of communication with the outside, and acquires data from the functional parts and transmits the data generated by the functional parts to the outside via the bus 106 and the system controller 107.
The communication network present condition monitoring unit 102 monitors present conditions of multiple communication networks, and acquires from the call control communication unit 101 through the monitoring, communication network present condition data, which represents the present conditions of the communication networks.

The communication network present condition holding unit 103 collects the communication network present condition data acquired by the communication network present condition monitoring unit 102 and holds the data in a storage medium.
The call-originating side information acquiring and holding unit 104 receives a call-originating request from a terminal device on the call-originating side, and acquires and holds applicable network data, which is included in the received call-originating request and represents applicable communication networks for setting up a call in located area of the terminal device on the call-originating side.

Moreover, the call-originating side information acquiring and holding unit 104 also acquires and holds available network data, which represents available communication networks for the above terminal device, in the same manner as acquiring the aforementioned applicable network data.
The call control unit 105 controls calls based on the applicable network data and the available network data held in the call-originating side information acquiring and holding unit 104, and the communication network present condition data held in the communication network present condition holding unit 103 upon reception of an call-originating request from the terminal device on the call-originating side.

### (Configuration Example of Terminal Device)

FIG. 2 is a functional block diagram illustrative of a terminal device according to an embodiment of the present invention.
This terminal device 200 is constituted by a mobile communication terminal device, for example, and includes a communication unit 201, an applicable priority order data holding unit 202, and a terminal side call control unit 203, which are connected by a system controller 204.
A call-originating relationship information holding unit 205, an operation unit 206, and a display unit 207 are also connected to the system controller 204.

The system controller 204 centrally manages the respective units of the aforementioned communication unit 201, the applicable priority order data holding unit 202, the terminal side call control unit 203, and the call-originating relationship information holding unit 205 either in accordance with external manipulation of the operation unit 206 or autonomously, so as to make the respective units completely execute their own functions. The system controller 204 also implements a man-machine interface mainly as output functions using the display unit 207.
That is, the aforementioned functional parts function in the following ways in cooperation with the system controller 204.
The communication unit 201 performs various types of communication with the outside, acquires data from the functional parts, and transmits the data generated by the functional parts to the outside via the system controller 204.

In the case where this terminal device 200 is a mobile communication terminal device, the communication unit 201 is configured so as to communicate with a base transceiver station located in the area via a wireless transmission line.
The applicable priority order data holding unit 202 holds applicable priority order data that represents priority order for selection of a communication network applicable for setting up a call in compliance with the call-originating request.
The terminal side call control unit 203 sends a call-originating request to the call controller 100 in accordance with external manipulation of the operation unit 206, and starts call setup processing for the communication network in priority order based on the applicable priority order data held in the applicable priority order data holding unit 202.

However, upon reception, from the call controller 100, of an application change notice to the effect that a different communication network from the communication network in the priority order based on the applicable priority order data held in the applicable priority order data holding unit 202, should be applicable, the call setup processing once started as described above is cancelled.
When the call setup processing is cancelled in the above manner, a new call-originating request, which has a condition of applying, to setting up a call, the communication network notified by the application change notice from the call controller 100 side, is made and the new call-originating request is transmitted.

### (Configuration Example of Call Control System)

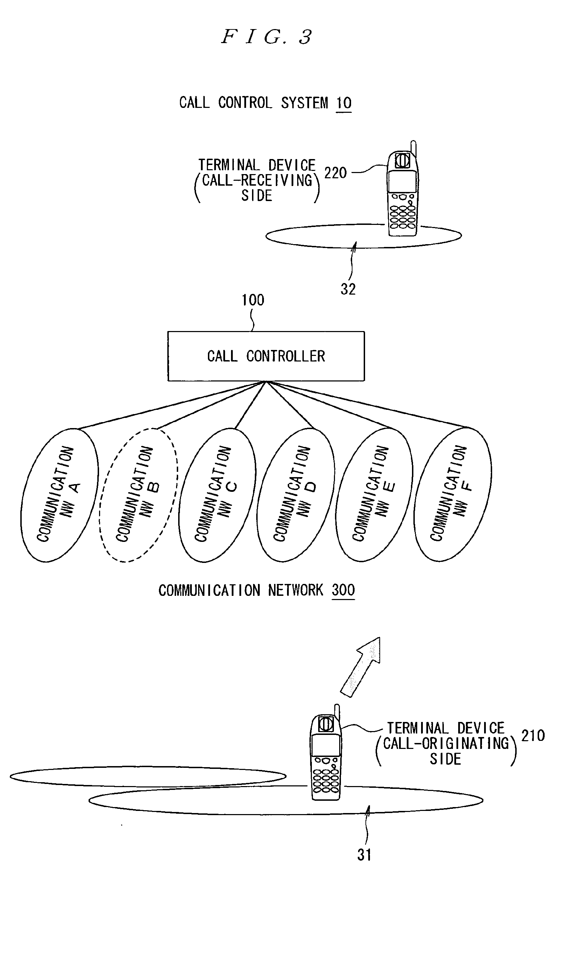

FIG. 3 is a schematic diagram illustrative of a configuration example of the call control system of the present invention.
The call control system of FIG. 3 is an exemplary call control system that controls calls in a mobile communication system.
When a terminal device 210 on the call-originating side sends a call-originating request, the call controller 100 in this call control system 10 sets up an optimum call setup in accordance with the call-originating request and establishes a communication path to a terminal device 220 on the receiving side.

While the two terminal devices 210 and 220 on the call-originating side and the call-receiving side and the single call controller 100 corresponding thereto are symbolically depicted for the sake of description of FIG. 3, the call control system 10 of the present invention may be configured including more of the same terminal devices and call controller.
The call controller 100 has a configuration as described before with reference to FIG. 1, and may selectively use multiple communication networks and controls setup of a call.

On the other hand, while the terminal device 210 and the terminal device 220 may be configured with the same specifications, they will have the configuration as already described with reference to FIG. 2 at least when focusing on the case of using them as terminal devices on the call-originating side.
Moreover, the terminal device 210 and the terminal device 220 have specifications of allowing selective use of multiple communication networks.

In FIG. 3, the aforementioned multiple communication networks are communication networks A, B, C, D, E, and E, and communication network language is abbreviated as 'communication NW'.
The terminal device 210 on the call-originating side is positioned within an area 31, and the communication networks available within this area 31 are B, C, D, E, and F. Note that the communication network B illustrated with a dotted line is assumed in a state where a failure is occurring and its use is impossible for the time being.
Meanwhile, although the terminal device 220 on the receiving side is positioned within an area 32, this position is managed by the call controller 100.

### (Overview of Call Control System Operations)

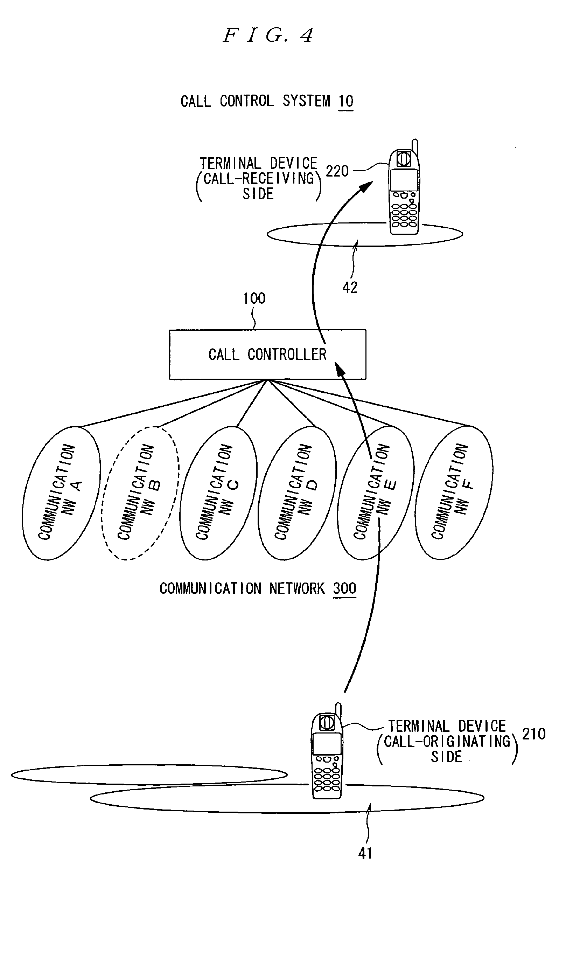

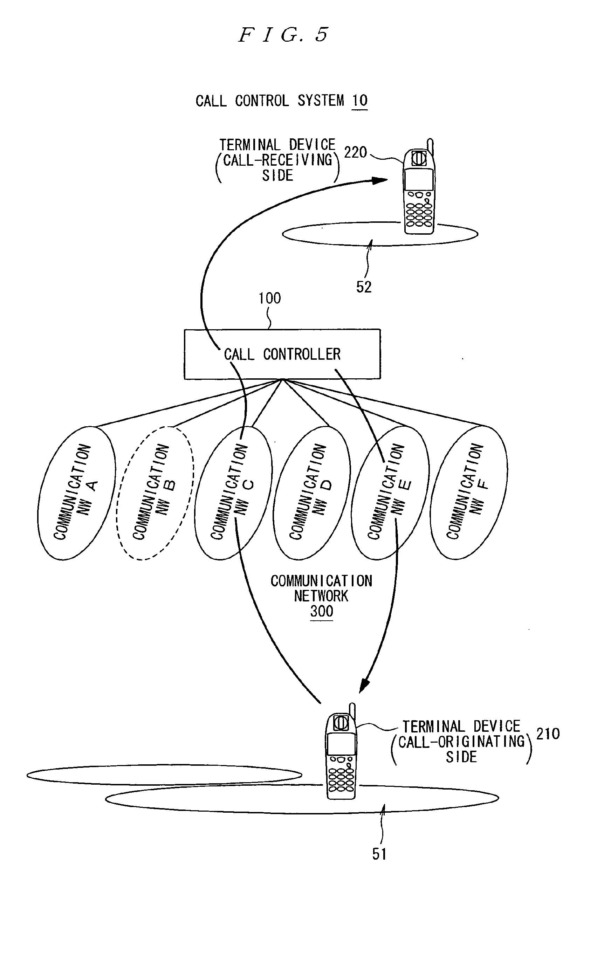

FIGS. 4 and 5 are schematic diagrams describing operations of the call controller of FIG. 3.
In FIG. 4, corresponding parts to the already described FIG. 3 are given the same reference numerals.
Communication networks in view of the physical structure (namely, according to product specifications) available for the terminal device 210 on the call-originating side are A, B, C, D, E, and F. Note that under a condition that the terminal device 210 on the call-originating side is within an area 41 shown in FIG. 4, the communication networks B, C, D, E, and F are applicable.
However, in this case, from a practical viewpoint, the communication network B is assumed in a state where a failure is occurring and its use is impossible for the time being.

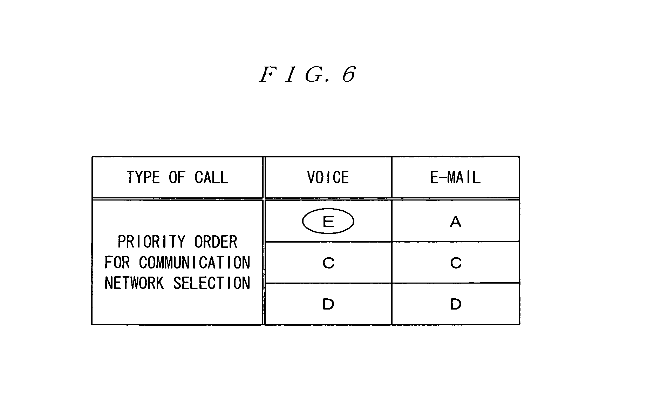

The configuration of the terminal device 210 on the call-originating side is the same as that of the terminal device 200 that has been described with reference to FIG. 2.
When the user performs a call-originating operation on the operation unit 206 for the terminal device 220 on the receiving side (present location thereof is area 42), a control signal is transmitted, based on the data held in the applicable priority order data holding unit 202, to the call controller 100 via a communication network in the highest priority.
The applicable priority order data held in the applicable priority order data holding unit 202, as already described, has a data structure as shown in FIG. 6 that represents priority order for selection of the communication network applicable for setting up a call in compliance with an call-originating request.

FIG. 6 is a diagram illustrating the structure of the data held in the applicable priority order data holding unit 202 of the terminal device 200 of FIG. 2.
An example of FIG. 6 employs data structure suitable for management of the priority order for selection of a communication network for every type of call such as a voice call or e-mail message.
This priority order is updated periodically, for example. In other words, if a condition of whether the terminal device is located in a certain area changes, the priority order is updated in accordance with this change.
When the terminal device 210 on the call-originating side is positioned in an area 41 shown in FIG. 4, for voice communication, a communication network E is a candidate in the highest priority applicable in setting a call based on the applicable priority order data of FIG. 6.

Accordingly, the terminal device 210 on the call-originating side, firstly, makes a call-originating request to the call controller 100 using the communication network E.
This call-originating request includes applicable network data, which represents a communication network applicable to the call-originating side area 41, available network data, which represents communication networks to which the terminal device 210 on the call-originating side corresponds in view of the specifications thereof, and a call identifier for specifying a call.
Meanwhile, the configuration of the call controller 100 has already been described with reference to FIG. 1. Data representing the present condition of a communication network detected by the communication network present condition monitoring unit 102 is held in the communication network present condition holding unit 103.

The call controller 100 temporarily holds in the call-originating side information acquiring and holding unit 104 the aforementioned applicable network data, the available network data, and corresponding identifiers included in the call-originating request sent over from the terminal device 210 on the call-originating side as described above.
The call controller 100 recognizes the present condition such as a failure or congestion of the network held in the communication network present condition holding unit 103, and selects an optimum communication network to be used in setting a call based on this recognition.

FIG. 4 symbolically represents a case where the communication network determined optimal through the above determination made by the call controller 100 is the same with communication network that has been tried as the highest priority order by the terminal device 210 on the call-originating side (namely, the case where the communication network E is selected in both cases).
In other words, the call controller 100 continues the control for setting up a call by operating the call control unit 105, thereby completing the setup for a call using the communication network E as a result.

Even in FIG. 5, corresponding parts to the already described FIG. 3 and FIG. 4 are given the same reference numerals.
Also in this case, it is assumed that a call-originating operation being carried out from the terminal device 210 on the call-originating side located in an area 51 to the terminal device 220 (present location thereof is area 52).
However, in the case of FIG. 5, it is assumed the case where the communication network (the communication network E in the case of the data of FIG. 6) applied for setting up a call that is selected by the terminal device 210 on the call-originating side based on the data structured as in FIG. 6 and held in the applicable priority order data holding unit 202 does not match the communication network determined optimal and selected on the call controller 100 side.

Such a mismatch occurs in a case where congestion occurs in the communication network E at the moment and the communication network present condition monitoring unit 102 can detect and recognize this condition on the call controller 100 side, whereas the terminal device 210 cannot recognize this condition as it does not have a detection function.
In such a case, the call control unit 105 in the call controller 100 stops the control for setting up a call through application of the communication network E, and notifies this stopping of control to the terminal device 210 on the call-originating side via the same communication network E.

Moreover, in such a case, another communication network such as the communication network C, for example, is selected by the call control unit 105 on the call controller 100 side based on the data representing the present condition of the communication network held in the communication network present condition holding unit 103, and this selection result is notified to the terminal device 210 on the call-originating side.
The terminal device 210 on the call-originating side that has received a notification as described above sends a new call-originating request under a condition of using the communication network C to the call controller 100.
On the call controller 100 side having received this request, a call is set up by the call control unit 105 under the condition of using the communication network C, and the setup is completed.

As can be easily understood from the above description, with this call control system 10, the call is controlled by the call control unit 105 of the call controller 100 with reference to the applicable network data and the available network data, as described above, which are supplied to be included in the call-originating request from the terminal device on the call-originating side.
At this time, an optimum communication network is then selected in consideration of the present condition including a failure or congestion of the communication networks and with reference to the communication network present condition data acquired by the aforementioned communication network present condition monitoring unit 102.
Therefore, according to the call controller, the terminal device, and the call control system according to this embodiment, an optimum call setup may be performed in consideration of not only the data stored on the terminal device side but data regarding the present condition of the communication networks normally stored on the call controller side instead of on the terminal device side.

### (Details of Call Control System Operations)

Operations of an exemplary call control system that have been described with reference to FIG. 1 to FIG. 6 will be described in detail below with reference to a sequence chart.

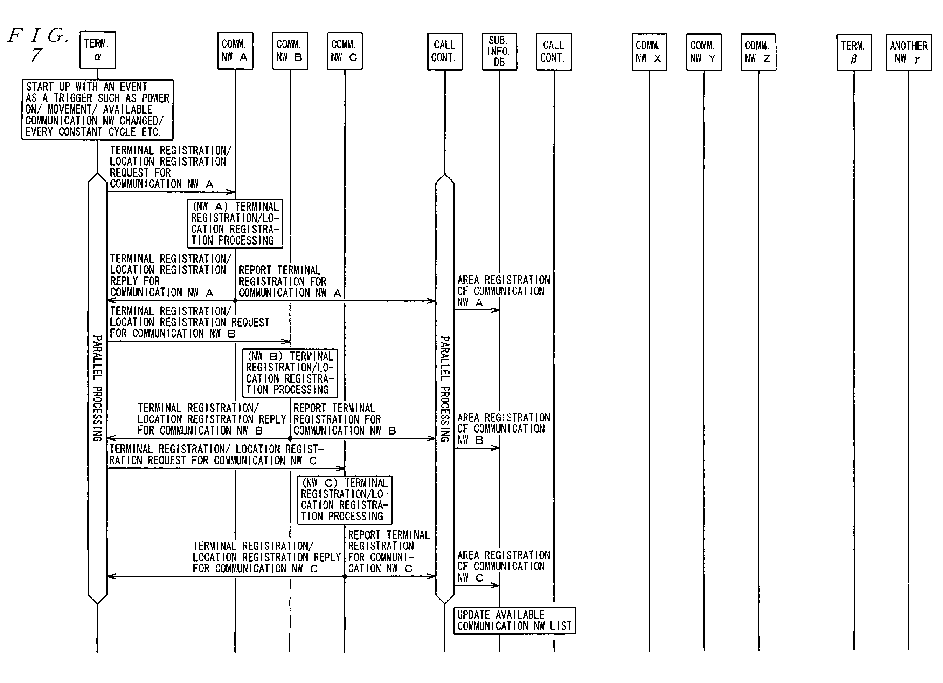

FIG. 7 is a sequence chart describing operations of location registration for a terminal device as a preparatory step of the call control operation in the call control system.
In FIG. 7, a terminal device α that can function as a call-originating side terminal device is abbreviated as a terminal α. While a terminal device β and a terminal device γ are also abbreviated in the same manner, location registration will be described for the terminal device α.

Note that location registration for the terminal device β and the terminal device γ is the same as that for the terminal device α.
Location registration for the terminal device α is made upon events such as turning on the power, moving its location, changing an available communication network, elapse of a prescribed cycle, and the like.
Location registration processes for a communication network A, a communication network B, and a communication network C are carried out seemingly in parallel through time-division processing, as indicated as 'parallel processing'.

Focusing on the process for the communication network A, firstly, a request for terminal registration and location registration for the communication network A is sent from the terminal device α, the terminal registration and location registration are conducted for the communication network A in reply to this request. Its result is notified to the terminal device α, the call controller, and a subscriber database as indicated as 'subscriber DB' in the drawing. While the subscriber database may be built within the call controller, in this example, an external Home Location Register (HLR) corresponds thereto.

Location registration processes for the communication network B and the communication network C are also carried out in the same manner through the 'parallel processing'. As a result of this 'parallel processing', the data (list) regarding available communication networks in the subscriber database is updated.

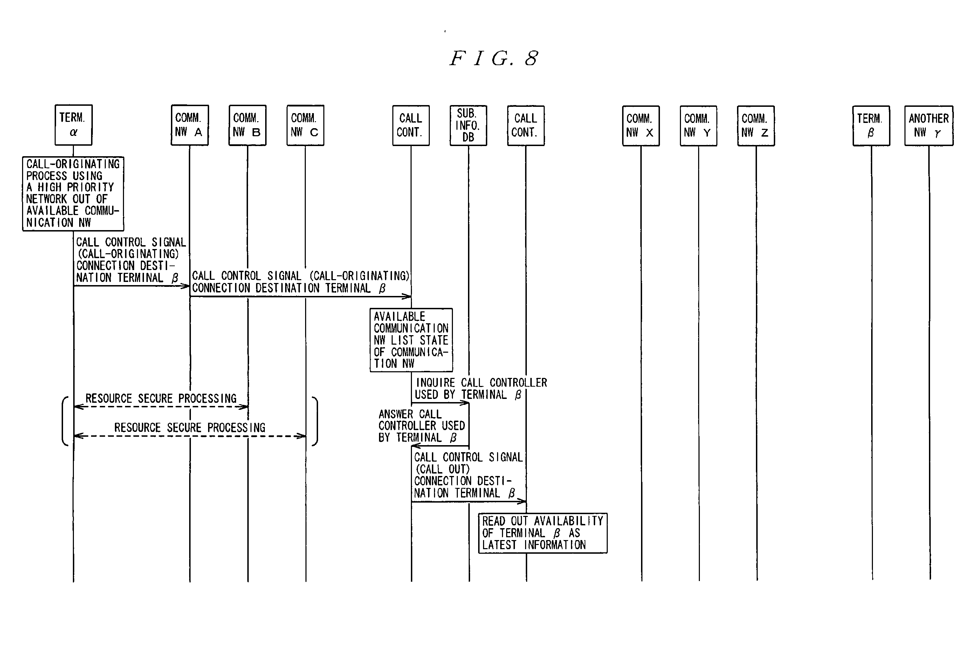

FIG. 8 is a sequence chart for the case of sending to the call controller a call control signal or call-originating request, in which the terminal device β is a connection destination on the receiving side from the terminal device α on the call-originating side.

As already described with reference to FIG. 4 to FIG. 6, a call control signal or call-originating request for the terminal device β on the receiving side is sent from the terminal device α to the call controller via the communication network A.
This call control signal includes the already described applicable network data and the available network data, and is attached with a call identifier.
In response to this, on the call controller side, correspondence of the available communication networks and the applicable communication networks, as already described, with a call (communication content) is specified and recognized by the call identifier with reference to FIG. 4 to FIG. 6.

Meanwhile, the call controller used by the terminal device β is inquired to get an answer depending on the data stored in the subscriber database.
Based on this answer, correspondence with the call (communication content) is specified by the call identifier and a call control signal for calling out is sent to the call controller used by the terminal device β.
As a result, the latest information available for the terminal device β is read out on the call controller side used by the terminal device β.
Note that as illustrated by broken lines, release processing of resources is carried out for the communication network B and the communication network C not used for the call setup for the time being so that the high level use efficiency of the resources for the entire call control system can be maintained.

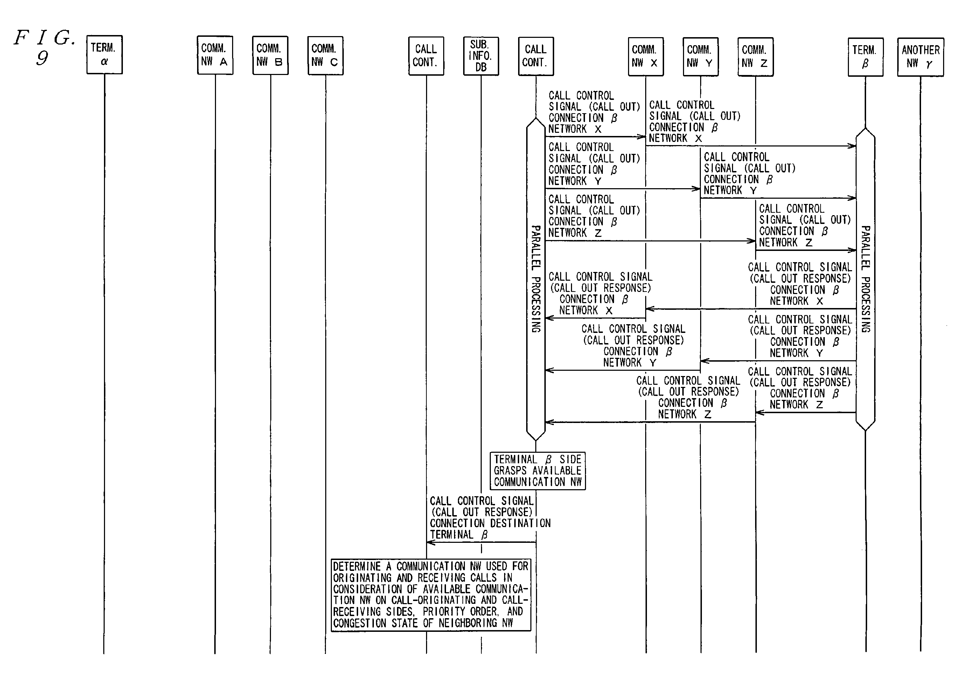

FIG. 9 is a sequence chart for call-receiving processing for the call controller used by the terminal device β on the receiving side and the terminal device β.
The call-receiving processing is also carried out seemingly in parallel through time-division processing, as indicated as 'parallel processing' in FIG. 9.
Moreover, they are transmitted in parallel seemingly and the same call identifier is attached to call control signals to be received, so that the corresponding respective processing units identify that these call control signals are related to the same call.

If the call control signals all for the terminal device β of a connection destination (call-receiving side) are sent at the same time from the call controller via communication networks X, Y, and Z, respectively, in response to this, call control signals as call out responses are returned from the terminal device β via the communication networks X, Y, and Z, respectively.
The call control signals as respective call out responses corresponding to the portions indicated as 'parallel processing' in the drawing are returned to the connection source in different arrival order.

In this embodiment, the communication network corresponding to the highest arrival order may be selected so as to be applied to reception of the call.
In other words, based on the results of the 'parallel processing', the call controller grasps the communication network that can be used by the terminal device β.
Next, a call control signal as a call out response under the condition that the connection destination is the terminal device β is returned to the call controller side used by the terminal device α on the call-originating side from the call controller side used by the terminal device β. This call control signal is also attached with the same aforementioned call identifier.

The call controller having received this signal determines communication networks to be used on the call-originating side and the call-receiving side in consideration of the communication networks available on the call-originating side and the call-receiving side, the priority order, and the congestion conditions of the neighboring communication networks.
In the process of determining the communication networks as described above, the process in the case of using the communication network initially selected by the terminal device on the call-originating side for the call setup is different from that in the case of changing the initially selected communication network and using a different communication network for the call setup.

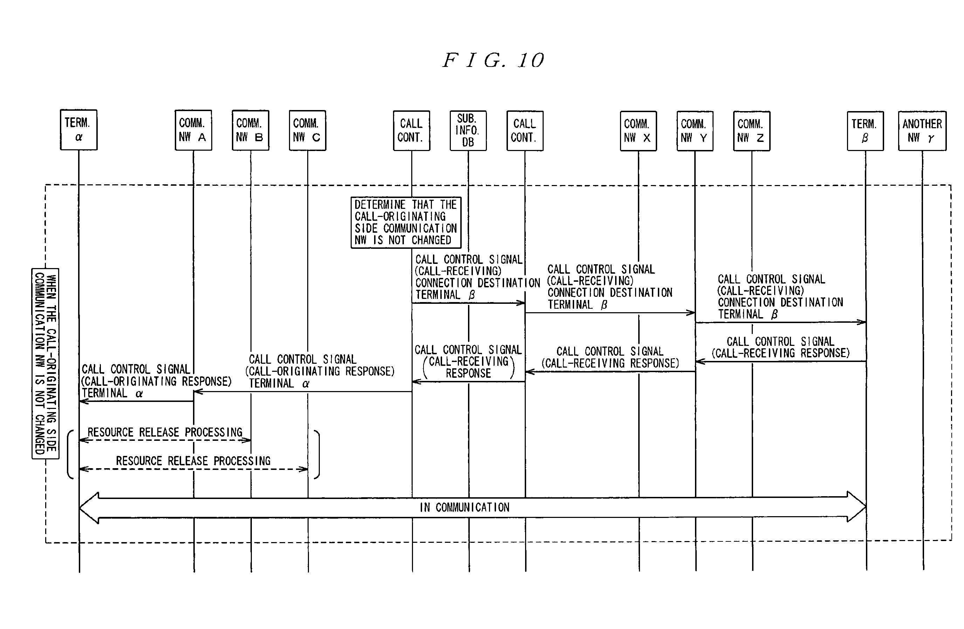

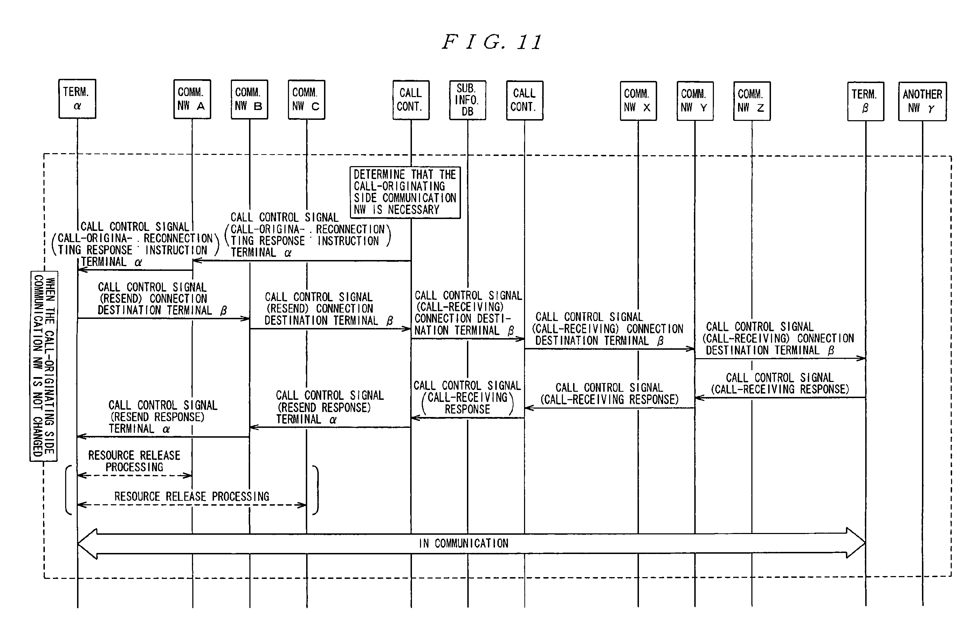

FIG. 10, as the former case, is a sequence chart for the case of using a communication network selected initially by the terminal device on the call-originating side for setting up the call, without change.
Moreover, as the latter case, FIG. 11 is a sequence chart for the case of changing the communication network selected by the terminal device on the call-originating side initially and using a different communication network for setting up the call.

In FIG. 10, if the call controller used by the terminal device α on the call-originating side determines that the communication network selected initially by the terminal device on the call-originating side will be used for setting up the call without change, a call control signal for a sequential call-receiving request is sent through the path from the call controller used by the terminal device β on the receiving side, the communication network Y, and then to the terminal device β. Even in transmission of the call control signal in this path, the same aforementioned call identifier is attached to all of the intermediate call control signals that have been described.
The respective units are capable of identifying the identity of the call (communication content) with certainty depending on this identifier.

The terminal device β having received the call control signal for the call-receiving request through the path as described above returns a call control signal in response thereto through the path from the terminal device β, the communication network Y, the call controller used by the terminal device β on the call-receiving side, and then to the call controller used by the terminal device α on the call-originating side. The same aforementioned call identifier is attached to all of the call control signals in this case.
The respective units are capable of identifying the identity of the call (communication content) with certainty depending on this identifier.

Moreover, a call control signal is sent as a call-originating response from the call controller used by the terminal device α on the call-originating side through the path from the communication network A to the terminal device α on the call-originating side.
The processing for setting up the call is continued under the condition of using the communication network selected initially by the terminal device on the call-originating side without change, thereby completing setting up the call. In other words, communication indicated as 'during communication' in FIG. 10 is established.
Note that as illustrated by the broken lines, release processing of resources is carried out for the communication network B and the communication network C determined not to be used for call setup, so that the high level use efficiency of the resources for the entire call control system can be maintained.

In FIG. 11, in the case where the call controller used by the terminal device α on the call-originating side determines that the communication network selected initially by the terminal device on the call-originating side is changed and a different communication network will be used for setting up the call, a call control signal as a call-originating response that is a reconnection instruction is returned to the terminal device α through the path from this call controller, the communication network A, and to the terminal device α.

The terminal device α having received this signal now resends the call control signal to the call controller used by the terminal device α via the communication network B.
The call controller having received this call control signal sends a call control signal as a call-receiving request to the terminal device α through the path from itself (call controller used by the terminal device α), the call controller used by the terminal device β, the communication network γ, and to the call controller used by the terminal device β.

The terminal device β receives the call control signal as a call-receiving request and sends a call control signal as a call-receiving side response to the call controller used by the terminal device α through the path from the terminal device β, the communication network γ, the call controller used by the terminal device β, and to the call controller used by the terminal device α.
The call controller used by the terminal device α having received this call control signal as a call-receiving side response sends a call control signal as a call-originating response to the terminal device α through the path from itself (call controller used by the terminal device α), the communication network B, and to the terminal device α.

The same aforementioned call identifier is attached to all of the aforementioned call control signals in FIG. 11.
The respective units are capable of identifying the identity of the call (communication content) with certainty depending on this identifier.
In the processing for setting up the call, the call is controlled again under the condition of changing the communication network selected initially by the terminal device on the call-originating side so as to complete setting up the call.

In other words, the communication indicated as 'during communication' in FIG. 11 is established.
Note that as illustrated by the broken lines, the release processing of resources is carried out for the communication network B and the communication network C is determined not to be used for call setup, so that the high level use efficiency of the resources for the entire call control system can be determined.
As understood by the sequence charts of FIG. 8 to FIG. 11, the present invention is conceivable even as an inventive technical idea of the following method.

In other words, a call control method for a call control system including a call controller for controlling a call by selectively using a plurality of communication networks and a plurality of terminal devices applicable in the plurality of communication networks, the call control method comprising:
in the call controller,
a communication network present condition monitoring step of monitoring present conditions of the plurality of communication networks and acquiring through the monitoring, communication network present condition data representing present conditions of the communication networks;
a communication network present condition data holding step of collecting the network present condition data acquired in the communication network present condition monitoring step and holding the collected data in a storage medium;
a call-originating side information acquiring and holding step of receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
a call controlling step of controlling the call based on the applicable network data and the available network data held in the call-originating side information acquiring and holding unit, and the communication network present condition data held in the communication network present condition holding unit upon reception of a call-originating request from the terminal device on the call-originating side, and in the terminal device,
an applicable priority order data holding step of holding applicable priority order data that represents a priority order for selection of the communication network applicable for setting up the call in compliance with a call-originating request; and
a terminal side call control step of sending an call-originating request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending a call-originating request under a condition of applying said another communication network in accordance with the application change notice.

### Industrial Applicability

The present invention can be effectively utilized for implementing a call control system, a call controller, a terminal device, and a call control method capable of selecting an optimum communication network without overly complicating the configurations of the terminal device and the call controller.

### Reference Signs List

- 10: Call control system
- 31, 32, 41, 42, 51, 52: Areas
- 100: Call controller
- 101: Call control communication unit
- 102: Communication network present condition monitoring unit
- 103: Communication network present condition holding unit
- 104: Call-originating side information acquiring and holding unit
- 105: Call control unit
- 106: Bus
- 200: Short message transmitter
- 201: Communication unit
- 202: Applicable priority order data holding unit
- 203: Short message transmitting unit
- 204: System controller
- 205: Call-originating relationship information holding unit
- 206: Operation unit
- 207: Display unit
- 210: Terminal device (call-originating side)
- 220: Terminal device (call-receiving side)
- 300: Communication network

## Claims

1. A call control system including:
a call controller for controlling a call by selectively using a plurality of communication networks; and a plurality of terminal devices applicable in the plurality of communication networks,
the call controller comprising:
a communication network present condition monitoring unit for monitoring present conditions of the plurality of communication networks and acquiring through the monitoring communication network present condition data representing the present conditions of the communication networks;
a communication network present condition data holding unit for collecting the network present condition data acquired by the communication network present condition monitoring unit and holding the collected data in a storage medium;
a call-originating side information acquiring and holding unit for receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
a call control unit for controlling the call based on the applicable network data and the available network data held in the call-originating side information acquiring and holding unit, and the communication network present condition data held in the communication network present condition holding unit upon reception of the call-originating request from the terminal device on the call-originating side, and
the terminal device comprising:
an applicable priority order data holding unit for holding applicable priority order data that represents a priority order for selection of the communication network applicable for setting up a call in compliance with the call-originating request; and
a terminal side call control unit for sending the call-originating request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending the call-originating request under a condition of applying said another communication network in accordance with the application change notice.

2. The call control system of claim 1, wherein the terminal device is configured so that the terminal side call control unit sends the call-originating request attached with a call identifier for specifying one call, and
the call controller is configured so as to identify the one call by the identifier attached to the call-originating request from the terminal device.

3. A call controller applicable to a call control system comprising: the call controller for controlling a call by selectively using a plurality of communication networks and a plurality of terminal devices applicable in the plurality of communication networks; the call controller comprising:
a call control communication unit for communicating with an outside;
a communication network present condition monitoring unit for monitoring present conditions of the plurality of communication networks and acquiring through the monitoring, communication network present condition data representing present conditions of the communication networks;
a communication network present condition data holding unit for collecting the network present condition data acquired by the communication network present condition monitoring unit and holding the collected data in a storage medium;
a call-originating side information acquiring and holding unit for receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
a call control unit for controlling the call based on the applicable network data and the available network data held in the call-originating side information acquiring and holding unit, and the communication network present condition data held in the communication network present condition holding unit upon reception of the call-originating request from the terminal device on the call-originating side.

4. The call controller of claim 3, wherein the call-originating side information acquiring and holding unit and the call control unit are configured so as to identify one call by a call identifier attached to the call-originating request from the terminal device.

5. A terminal device appropriate for a call control system comprising a call controller for controlling a call by selectively using a plurality of communication networks and a plurality of terminal devices applicable in the plurality of communication networks, the terminal device comprising:
an applicable priority order data holding unit for holding applicable priority order data that represents a priority order for selection of a communication network applicable for setting up the call in compliance with a call-originating request; and
a terminal side call control unit for sending an call-originating call request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending a call-originating request under a condition of applying said another communication network in accordance with the application change notice.

6. The terminal device of claim 5, wherein the terminal side call controller is configured so as to send the call-originating request attached with a call identifier for specifying one call.

7. A call control method for a call control system including a call controller for controlling a call by selectively using a plurality of communication networks and a plurality of terminal devices applicable in the plurality of communication networks, the call control method comprising:
in the call controller,
a communication network present condition monitoring step of monitoring present conditions of the plurality of communication networks and acquiring through the monitoring, communication network present condition data representing present conditions of the communication networks;
a communication network present condition data holding step of collecting the network present condition data acquired in the communication network present condition monitoring step and holding the collected data in a storage medium;
a call-originating side information acquiring and holding step of receiving a call-originating request from a terminal device on a call-originating side, and acquiring and holding applicable network data representing an applicable communication network for setting up the call in an area where the terminal device on the call-originating side is located, and available network data representing a communication network which the terminal device on the call-originating side can utilize, the applicable network data and the available network data being included in the received call-originating request; and
a call controlling step of controlling the call based on the applicable network data and the available network data held in the call-originating side information acquiring and holding unit, and the communication network present condition data held in the communication network present condition holding unit upon reception of a call-originating request from the terminal device on the call-originating side, and
in the terminal device,
an applicable priority order data holding step of holding applicable priority order data that represents a priority order for selection of the communication network applicable for setting up the call in compliance with a call-originating request; and
a terminal side call control step of sending an call-originating request to the call controller in accordance with external manipulation, starting call setup processing for use of the communication network in the priority order based on the applicable priority order data held in the applicable priority order data holding unit, and upon reception of an application change notice of applying another communication network other than the communication network in the priority order based on the applicable priority order data held in the applicable priority order data holding unit, stopping the call setup processing, and sending a call-originating request under a condition of applying said another communication network in accordance with the application change notice.
